# FASCICULE DE BREVET EUROPEEN

(11) **EP 3 990 875 B1**
(45) Date de publication et mention de la délivrance du brevet: **03.05.2023**
(21) Numéro de dépôt: 20785781.4
(22) Date de dépôt: 18.06.2020
(51) Int. Cl.: G01H 1/00, G01M 13/045

(54) **PROCEDE D'ACQUISITION DE DONNEES POUR LA DETECTION D'UN ENDOMMAGEMENT D'UN PALIER**
VERFAHREN ZUR DATENERFASSUNG ZUR ERKENNUNG VON SCHÄDEN AN EINEM LAGER
METHOD FOR ACQUIRING DATA FOR DETECTING DAMAGE TO A BEARING

(30) Priorité: 27.06.2019 FR 1907008
(43) Date de publication de la demande: 04.05.2022
(73) Titulaire: SAFRAN AIRCRAFT ENGINES, 75015 Paris (FR)
(72) Inventeur: DEMAISON, François, Maurice, Marcel, 77550 Moissy-Cramayel (FR); POUGEON, Jean-Robert, André, Fernand, 77550 Moissy-Cramayel (FR)
(74) Mandataire: Cabinet Beau de Loménie
(86) Numéro de dépôt international: PCT/FR2020/051064
(87) Numéro de publication internationale: WO 2020/260807

(56) Documents cités:
- EP-A2- 2 837 919
- WO-A1-99/19698
- US-A1- 2017 108 406

## Description

### DOMAINE TECHNIQUE

Le présent exposé concerne le domaine de la surveillance de composants et de la détection de panne. Le présent exposé concerne plus précisément un procédé d'acquisition de données pour la détection d'un endommagement d'un palier. Un tel procédé trouve ses applications sur les machines tournantes, par exemple les turbomachines employées sur les aéronefs.

### ARRIÈRE-PLAN TECHNOLOGIQUE

La surveillance des composants d'une turbomachine d'aéronef requiert généralement une partie embarquée sur la turbomachine, qui acquiert des signaux émanant des composants à surveiller et extrait des données pertinentes de ces signaux, et une partie au sol, qui traite ces données pour réaliser un diagnostic des composants concernés. Pour effectuer les diagnostics en temps réel, les données extraites par la partie embarquée sont directement transmises à la partie au sol. Diminuer le volume de données transmises est donc une préoccupation constante.

Dans le cadre de la détection d'endommagement d'un palier, diminuer le volume de données transmises implique néanmoins que la partie embarquée doive réaliser de nombreux prétraitements des données. Actuellement, une grande partie du diagnostic est donc effectuée sur la partie embarquée. Cela a plusieurs inconvénients : les coûts de développement sont élevés pour optimiser la partie embarquée, les contraintes liées au fait d'être embarqué brident la capacité algorithmique d'identification des pannes, il faut assurer en tout temps la cohérence entre la partie embarquée et la partie au sol, etc.

La demande de brevet FR 2 952 177 A1, de la Demanderesse, décrit un procédé de détection d'un endommagement d'un roulement de palier.

Bien que ce procédé apporte satisfaction, il demeure une marge d'amélioration pour surmonter au moins en partie les inconvénients mentionnés ci-dessus. Par ailleurs, EP 2 837 919 décrit un système de surveillance de données de vibration, WO 99/19698 décrit un système de compression de données de mesures corrélatives avec un état d'une machine, et US 2017/108406 décrit un procédé de traitement de données pour évaluer la criticité de défauts de paliers en utilisant l'énergie de vibration.

### PRÉSENTATION DE L'INVENTION

A cet effet, le présent exposé concerne un procédé d'acquisition de données pour la détection d'un endommagement d'un palier, comprenant les étapes suivantes :
(a) obtenir un signal vibratoire du palier sur une période de temps ;
(b) déterminer des spectrogrammes dudit signal vibratoire à différents instants de la période de temps ;
(c) détecter les pics sur chaque spectrogramme ;
(d) parmi les pics détectés, retenir les pics qui, dans des spectrogrammes correspondant à des instants successifs et transformés par rééchantillonnage synchrone avec une vitesse de rotation du palier, seraient présents à une même fréquence, avec une tolérance prédéterminée ;
(e) identifier des raies spectrales correspondant aux pics retenus ;
(f) stocker une information représentative desdites raies spectrales dans un rapport utilisable par une unité de détection d'un endommagement du palier.

Ce procédé permet d'acquérir les données, typiquement en vol, et de les préparer sous la forme d'un rapport à transmettre à une unité de détection, typiquement placée au sol.

Le palier peut être un palier de turbomachine, par exemple un roulement tel qu'un roulement supportant en rotation au moins un arbre rotatif. Le palier peut supporter, plus généralement, tout composant tournant.

Le signal vibratoire traduit l'évolution d'une grandeur représentative notamment des vibrations du palier, par exemple une accélération, en fonction du temps. Il s'agit donc d'un signal temporel. Le signal vibratoire peut être acquis au cours du procédé ou préalablement enregistré et récupéré par le procédé lors de l'étape (a).

La période de temps est une période de temps pendant laquelle le palier fonctionne, voire pendant laquelle la vitesse de rotation du palier peut varier.

Un spectrogramme représente l'amplitude d'un signal en fonction de la fréquence. Il s'agit d'une transformation du signal vibratoire à un instant donné. Un spectrogramme peut être obtenu par transformation de Fourier du signal vibratoire ou par d'autres transformations connues de l'homme du métier, par exemple par ondelettes ou calcul de densité de puissance spectrale (en anglais *power spectral density,* PSD).

Les pics détectés peuvent être des extrema locaux, en particulier des maxima locaux et/ou des minima locaux.

Le rééchantillonnage synchrone est une technique connue de l'homme du métier, qui vise à transformer une donnée (un signal) pour y éliminer l'influence de la vitesse de rotation du palier. Cette technique est par exemple décrite dans la demande de brevet FR 2 952 177 A1 précitée.

A l'étape (d), on retient, parmi les pics précédemment détectés, ceux qui, dans des spectrogrammes correspondant à des instants successifs et transformés par rééchantillonnage synchrone avec une vitesse de rotation du palier, sont présents à une même fréquence si tel est le cas, sachant qu'il est possible de ne pas trouver de pics répondant à cette condition. Cette étape peut inclure le rééchantillonage synchrone desdits spectrogrammes, puis la détection d'alignements de pics à une même fréquence. Alternativement, l'alignement des pics à une même fréquence, aussi appelée redondance des pics, peut être détecté par d'autres méthodes, par exemple des méthodes de traitement d'images, ne nécessitant pas d'effectuer explicitement le rééchantillonage synchrone. Dans tous les cas, les pics retenus se caractérisent par le fait qu'ils seraient alignés, c'est-à-dire présents à une même fréquence, si le rééchantillonage synchrone était effectué.

La tolérance utilisée pour détecter cette présence peut être une tolérance en fréquence et/ou en amplitude. Alternativement ou en complément, la tolérance peut consister à accepter l'absence d'un pic à un ou plusieurs instants dans une série de spectrogrammes dans lesquels le pic est par ailleurs en majorité présent.

Pour l'étape (d), on considère par exemple des spectrogrammes correspondant à au moins deux instants successifs, de préférence trois, quatre, cinq ou plus.

Une raie spectrale, ou plus simplement raie, est une raie de spectrogramme. Les raies spectrales identifiées à l'étape (e) peuvent être les raies de chacun des spectrogrammes (rééchantillonné ou non) déterminés à l'étape (b), mais aussi, alternativement ou en complément, des raies d'un spectrogramme moyen cumulant les informations desdits spectrogrammes. Par exemple, si les spectrogrammes de l'étape (b) sont obtenus par transformée de Fourier, les raies de l'étape (e) peuvent être des raies de la PSD calculée à partir de la moyenne des transformées de Fourier. Ainsi, il est possible d'identifier une raie unique pour chaque fréquence concernée, indépendamment des instants de la période de temps pour lesquels les transformées de Fourier ont été déterminées. L'étape (e) mentionne le terme « raies » au pluriel, de façon générique, mais il va de soi que cette expression inclut aussi le singulier. L'information représentative stockée dans le rapport peut être une description des raies spectrales elles-mêmes, par exemple leur fréquence et/ou leur amplitude, ou toute information permettant de décrire les raies identifiées, à une certaine précision près. La précision est fonction du taux de perte d'information accepté pour le procédé d'acquisition.

Grâce au procédé d'acquisition proposé, le rapport contient relativement peu de données, donc est facile à envoyer à une unité de détection d'un endommagement de palier qui serait au sol. De plus, l'analyse de la redondance des pics dans les spectrogrammes successifs permet de distinguer du bruit les raies dues à des phénomènes mécaniques. Ainsi, le procédé d'acquisition opère une sélection efficace de l'information pertinente, sans présupposer de la localisation des raies intéressantes pour diagnostiquer un endommagement du palier.

Dans certains modes de réalisation, le procédé d'acquisition comprend, avant de stocker l'information représentative des raies spectrales à l'étape (f), le fait de coder une caractéristique des raies spectrales avec une précision différente selon que la valeur de cette caractéristique est faible ou élevée, et inclure cette caractéristique codée dans ladite information représentative. Cette différence de précision est parfois appelée « multirésolution ». La caractéristique concernée peut être l'amplitude, la fréquence ou toute autre grandeur représentative de celles-ci. Ainsi, par exemple, l'amplitude des raies spectrales de relativement basse amplitude est codée avec une précision différente de l'amplitude des raies spectrales de relativement haute amplitude. Typiquement, on peut prévoir une précision meilleure pour les raies de basse amplitude que pour les raies de haute amplitude. Un codage en multirésolution peut être obtenu en appliquant à la caractéristique de chaque raie une fonction qui dilate les zones où l'on souhaite une meilleure précision et contracte les zones où l'on peut se contenter d'une précision moins bonne. La fonction peut être une transformation non linéaire, par exemple un logarithme.

Dans certains modes de réalisation, les raies spectrales correspondant à un fonctionnement nominal du palier sont ignorées. En effet, le rapport visant à détecter un endommagement, il n'est pas utile d'y inclure des raies correspondant à un fonctionnement nominal du palier. Ces raies peuvent être ignorées de plusieurs façons, par exemple en les soustrayant des spectrogrammes, en ne retenant pas les pics correspondants, ou encore en ne les inscrivant pas dans le rapport lorsque les raies sont identifiées. Ceci entraîne un gain de temps de calcul, un gain de place dans le rapport et éventuellement une simplification de l'identification des raies pertinentes. Les raies nominales peuvent être préalablement connues, au moyen de tests réels, de calculs ou de simulations, et préenregistrées.

Dans le domaine technique considéré, on parle parfois de données nettoyées, par opposition aux données complètes, pour désigner les données dont on a retiré les raies spectrales qui sont toujours présentes lors d'un fonctionnement nominal du palier. Ces raies pourraient en effet masquer d'autres raies potentielles à extraire.

Dans certains modes de réalisation, les raies spectrales identifiées à l'étape (e) sont soustraites des spectrogrammes, et les étapes (d) et (e) sont répétées. En d'autres termes, les étapes (d) et (e) peuvent être effectuées de manière itérative en retranchant à chaque fois les raies spectrales identifiées, pour faciliter la détection de pics éventuellement moins visibles. Cette répétition peut être effectuée jusqu'à ce qu'on ne retienne plus de pics qui satisfassent les conditions de recherche, c'est-à-dire la tolérance précitée. Au moins la dernière occurrence des étapes (d) et (e), voire chaque occurrence, est suivie directement ou indirectement de l'étape (f) de façon à stocker une information représentative des raies identifiées dans le rapport.

Dans certains modes de réalisation, après la répétition des étapes (d) et (e), les pics restants dont l'amplitude est supérieure à un seuil prédéterminé sont retenus, et les raies spectrales correspondantes sont identifiées. En effet, après les étapes (d) et (e), l'information restant dans les spectrogrammes est soit du bruit, soit une information pertinente complexe. Afin de limiter la perte d'information utile, les pics restants dont l'amplitude est supérieure à un seuil prédéterminé, sont retenus. A l'étape (f), une information représentative des raies correspondantes pourra être stockée dans le rapport. Ainsi, malgré la complexité éventuelle du phénomène mécanique ayant donné naissance à ces pics, ils pourront faire l'objet d'une analyse complète au sol. Par suite, dans ces modes de réalisation, le procédé prend aussi en considération les facteurs complexes d'endommagement du palier.

Dans certains modes de réalisation, l'information représentative comprend l'évolution de l'amplitude de la raie spectrale en fonction de la vitesse de rotation du palier. Cette évolution peut être comprise pour au moins une raie, pour au moins une majorité de raies ou pour chaque raie. L'évolution de l'amplitude d'une raie peut être déterminée simplement à partir des spectrogrammes correspondant aux instants successifs, et inclure cette information dans le rapport est utile pour le diagnostic d'endommagement. On comprend que, dans ces modes de réalisation, la vitesse du palier varie au cours de la période de temps considérée.

Dans certains modes de réalisation, l'information représentative comprend des groupes comportant une première information correspondant à une raie spectrale de référence et une ou plusieurs deuxièmes informations correspondant chacune à une raie spectrale secondaire par rapport à la raie spectrale de référence. Afin de diminuer encore la taille du rapport et d'optimiser ainsi son envoi, il est possible de regrouper les raies, par exemple par harmoniques, afin d'éviter d'inclure l'information de position de chaque raie individuellement. Une première raie est identifiée comme raie spectrale de référence et l'information y relative est une information d'un premier type (première information), par exemple suffisant à elle-seule à identifier la raie de référence. Les raies suivantes sont prises en compte dans le rapport grâce à une information d'un deuxième type (deuxième information), chaque deuxième information étant idéalement moins volumineuse que la première information, et définissant chacune de ces raies par rapport à la raie de référence. On dit parfois que les raies spectrales sont regroupées en peignes, en raison de la ressemblance visuelle entre un peigne et une multitude de raies.

Dans certains modes de réalisation, l'information représentative comprend, pour chaque raie spectrale déjà connue lors d'un fonctionnement précédent du palier, uniquement un indicateur d'amplitude, et pour chaque raie spectrale non connue lors d'un fonctionnement précédent du palier, au moins la fréquence de la raie spectrale. De cette façon, il est possible de diminuer encore davantage la taille du rapport, la caractérisation complète des raies pouvant être rebâtie sur la base d'un fonctionnement précédent connu du palier et du présent rapport, dans lequel chaque information représentative comprend, lorsque cela est possible, uniquement l'écart d'amplitude d'une raie entre le fonctionnement précédent et le fonctionnement présent. L'information représentative peut être une information complète pour les raies spectrales non connues précédemment.

Dans certains modes de réalisation, avant d'être stockée, l'information représentative est codée au moyen d'un dictionnaire préétabli avant la mise en oeuvre dudit procédé d'acquisition. Par préétabli, on comprend que le dictionnaire est établi sur la base de tests ou simulations préalables. Comme ce dictionnaire est connu et ne dépend pas de l'exécution du procédé, il n'est pas nécessaire de le calculer à chaque fois ni de le transmettre, ce qui diminue encore le volume des données échangées entre la partie embarquée et la partie au sol.

Le présent exposé concerne également une unité d'acquisition de données pour la détection d'un endommagement d'un palier, notamment pour turbomachine, l'unité d'acquisition comprenant
(a) un module d'obtention d'un signal vibratoire du palier sur une période de temps ;
(b) un module de détermination des spectrogrammes dudit signal vibratoire à différents instants de la période de temps ;
(c) un module de détection des pics sur chaque spectrogramme ;
(d) un module de sélection configuré pour, parmi les pics détectés par le module de détection, retenir les pics qui, dans des spectrogrammes correspondant à des instants successifs et transformés par rééchantillonnage synchrone avec une vitesse de rotation du palier, seraient présents à une même fréquence, avec une tolérance prédéterminée ;
(e) un module d'identification de raies spectrales correspondant aux pics retenus ;
(f) un module de stockage, configuré pour stocker une information représentative desdites raies spectrales dans un rapport utilisable par une unité de détection d'un endommagement du palier.

L'unité d'acquisition de données peut être configurée pour mettre en oeuvre tout ou partie des caractéristiques du procédé d'acquisition de données précédemment décrit.

Le présent exposé concerne également une turbomachine, notamment une turbomachine d'aéronef, comprenant un palier, une unité d'acquisition telle que précédemment décrite et une unité de communication configurée pour envoyer le rapport à une unité de détection d'un endommagement de palier distante.

Dans un mode particulier de réalisation, les différentes étapes du procédé d'acquisition de données sont déterminées par des instructions de programmes d'ordinateur.

En conséquence, le présent exposé vise aussi un programme sur un support d'informations, ce programme étant susceptible d'être mis en oeuvre dans un dispositif d'acquisition ou plus généralement dans un ordinateur, ce programme comportant des instructions adaptées à la mise en oeuvre des étapes d'un procédé d'acquisition de données tel que décrit ci-dessus.

Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

Le présent exposé vise aussi un support d'informations lisible par un ordinateur ou par un microprocesseur, et comportant des instructions d'un programme tel que mentionné ci-dessus.

Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une disquette (floppy dise) ou un disque dur. D'autre part, le support d'informations peut être un support transmissible tel qu'un signal électrique ou optique, qui peut être acheminé via un câble électrique ou optique, par radio ou par d'autres moyens. Le programme selon le présent exposé peut être en particulier téléchargé sur un réseau de type Internet.

### BRÈVE DESCRIPTION DES DESSINS

L'invention et ses avantages seront mieux compris à la lecture de la description détaillée qui suit, de modes de réalisation donnés à titre d'exemples non limitatifs. Cette description se réfère aux dessins annexés, sur lesquels :
[Fig. 1] La figure 1 est un diagramme illustrant un procédé d'acquisition de données selon un mode de réalisation.
[Fig. 2] La figure 2 illustre la séparation des raies du fond de spectre selon un mode de réalisation.
[Fig. 3] La figure 3 illustre la détection de pics selon un mode de réalisation.
[Fig. 4] La figure 4 illustre le fait de retenir certains des pics détectés selon un mode de réalisation.
[Fig. 5] La figure 5 est un diagramme représentant schématiquement une turbomachine comprenant une unité d'acquisition de données.

### DESCRIPTION DES MODES DE RÉALISATION

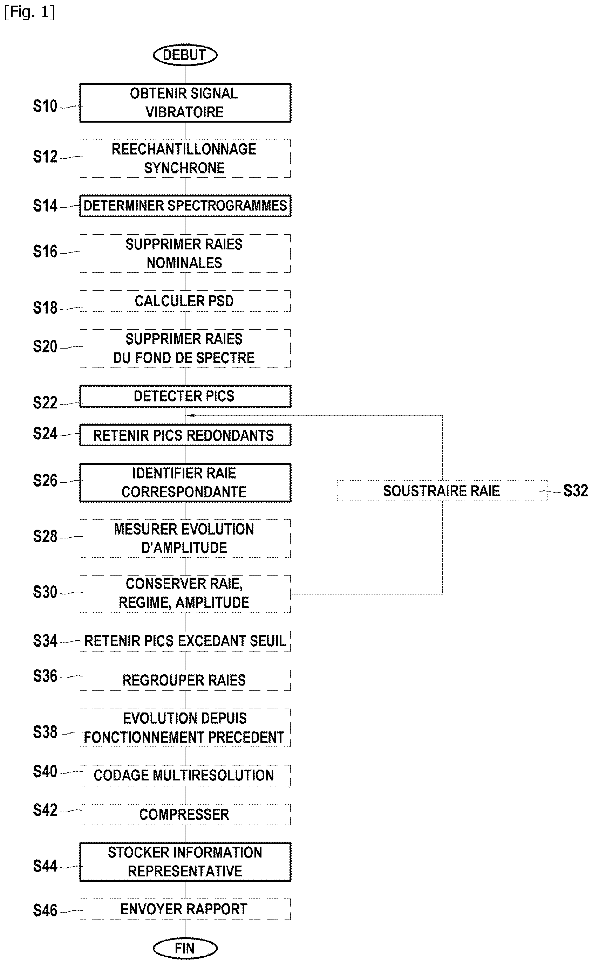

La figure 1 illustre un procédé d'acquisition de données selon un mode de réalisation. Ce procédé peut être utilisé dans le cadre de la détection de l'endommagement d'un palier. Globalement, le principe de la détection est de mettre en lumière l'endommagement d'un palier en mesurant l'influence que cet endommagement a sur les vibrations d'un élément tournant de la turbomachine, certaines fréquences pouvant être reliées de manière plus ou moins complexe à certains types d'endommagements. Le procédé de la figure 1 permet plus spécifiquement d'acquérir les données vibratoires pertinentes qui pourront, ensuite, servir à l'appréciation de l'endommagement du palier.

A cette fin, le procédé comprend une étape S10 au cours de laquelle un signal vibratoire est acquis sur une période de temps. Le signal vibratoire peut traduire les vibrations du palier ou d'un élément tournant solidaire en rotation d'une partie du palier. Le signal vibratoire peut être acquis par exemple au moyen d'un accéléromètre, d'une jauge de contrainte ou de tout capteur adapté.

Le palier peut également être équipé d'un ou plusieurs tachymètres pour mesurer la vitesse de rotation, aussi appelée régime, des éléments tournants, notamment dudit palier. Ces capteurs de vitesse et de vibration peuvent être reliés à un calculateur qui effectue l'acquisition des signaux et les transmet ensuite, de préférence numériquement, à une unité de calcul.

La suite du procédé peut être appliquée pour chaque signal vibratoire, typiquement issu de chaque accéléromètre. Sans perte de généralité, on ne détaillera par la suite que le traitement d'un signal vibratoire.

A l'étape S12, optionnelle, on effectue un rééchantillonnage synchrone du signal vibratoire. Comme les fréquences à surveiller pour détecter un endommagement du palier dépendent des différentes vitesses de rotation, il est utile, afin de simplifier son traitement, de rééchantillonner le signal vibratoire de façon synchrone aux vitesses de rotation en jeu, ce qui peut inclure les vitesses mesurées directement par les tachymètres mais aussi toute combinaison linéaire de ces vitesses : par exemple, pour un palier interarbre, la vitesse de rotation du palier sera la somme ou la différence de la vitesse des deux arbres par rapport à une partie considérée comme fixe de la turbomachine.

Le rééchantillonnage synchrone, connu en soi et décrit par exemple dans la publication FR 2 952 177 A1 précitée, permet d'éliminer l'influence de la vitesse de rotation. Il peut donc être fait un rééchantillonnage synchrone du même signal vibratoire pour chaque régime de rotation, c'est-à-dire par rapport à chaque composant tournant cinématiquement indépendant, afin d'éliminer sélectivement l'influence de telle ou telle rotation.

Comme indiqué précédemment, on détermine ensuite des spectrogrammes dudit signal vibratoire à différents instants de la période de temps (étape S14). En l'occurrence, on détermine des spectrogrammes pour chaque signal vibratoire rééchantillonné. Par exemple, on peut calculer des transformées de Fourier du signal vibratoire, éventuellement au moyen de techniques connues en elles-mêmes.

A l'étape S16, optionnelle, on supprime des spectrogrammes les raies correspondant à un fonctionnement nominal du palier. En effet, ces raies pourraient complexifier la détection de certaines raies vibratoires pertinentes. En outre, il n'est pas pertinent de les transmettre pour diagnostiquer l'endommagement, puisque ces raies sont associées à un fonctionnement normal du palier non endommagé. Supprimer ces raies directement dans les spectrogrammes, avant traitement, permet d'alléger les traitements qui suivent. Toutefois, comme indiqué précédemment, ceci n'est qu'un exemple du cas plus général consistant à ignorer les raies spectrales correspondant à un fonctionnement nominal du palier.

A l'étape S18, optionnelle, une PSD du signal vibratoire est calculée. Le calcul de la PSD peut utiliser une méthode connue en soi, par exemple la méthode de Welsch qui utilise les transformées de Fourier calculées à différents instants, qui en l'occurrence ont déjà été calculées à l'étape S14 : ce sont les spectrogrammes. La PSD fournit un spectre avec un bruit réduit, ce spectre étant un spectre moyen sur la période de temps considérée.

A l'étape S20, optionnelle, pour chaque spectrogramme, on sépare les raies du fond de spectre. Les raies sont les évolutions accidentées du spectrogramme (fortes variations), tandis que le fond de spectre représente l'évolution de fond du signal (faibles variations). La détermination d'une délimitation entre les raies et le fond de spectre est à la portée de l'homme du métier. Le fait de séparer les raies du fond de spectre permet de compresser plus efficacement les données issues de chacun de ces éléments.

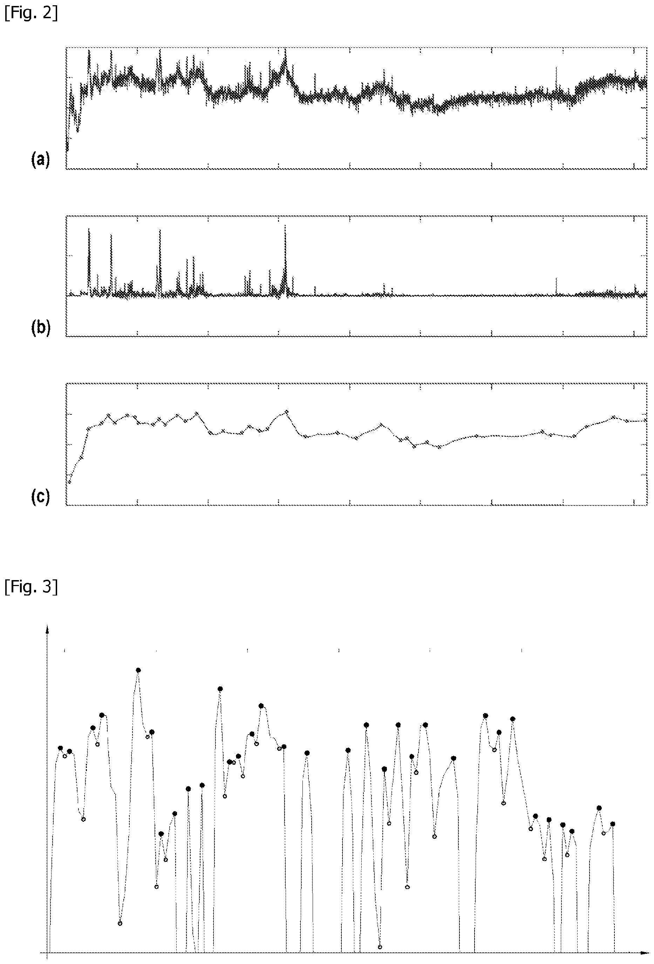

La figure 2 illustre cette étape au moyen de différents graphes montrant l'amplitude des vibrations en fonction de la fréquence : le graphe (a) représente le logarithme en base 10 du spectrogramme, le graphe (b) représente les raies extraites du graphe (a) et le graphe (c) représente le logarithme en base 10 du fond de spectre. Chaque graphe illustre l'amplitude du signal en fonction de la fréquence. Comme on le voit sur le graphe (c), le fond de spectre est une information à faible variabilité qui peut être approximée efficacement par quelques points le long de la courbe. Ces points peuvent être traités et transmis séparément. La suite du procédé de la figure 1 s'applique aux raies extraites illustrées sur le graphe (b).

Alternativement, il serait possible de ne pas différencier les raies du fond de spectre à ce stade, bien que cela complique la détection des pics qui a lieu à l'étape suivante.

A l'étape S22 en effet, on détecte les pics sur chaque spectrogramme. Comme indiqué précédemment, le terme « pics » est générique et désigne aussi bien les pics hauts (sommets) que les pics bas (vallées), c'est-à-dire les maxima locaux et les minima locaux. Il est bien entendu possible de détecter seulement les maxima locaux, seulement les minima locaux, ou l'un et/ou l'autre.

La figure 3 illustre cette étape. La courbe représente l'amplitude du spectrogramme en fonction de la fréquence. Les pics ou extrema locaux sont repérés, sur cette courbe, par de petits cercles, respectivement des cercles pleins pour les pics et des cercles vides pour les vallées. La détection de pics d'une courbe est, en soi, connue de l'homme du métier. Cette détection de pics permet d'extraire du spectrogramme les informations pertinentes, les pics dans un sens ou dans l'autre permettant de distinguer les données dues à l'endommagement du palier d'une part et le bruit d'autre part.

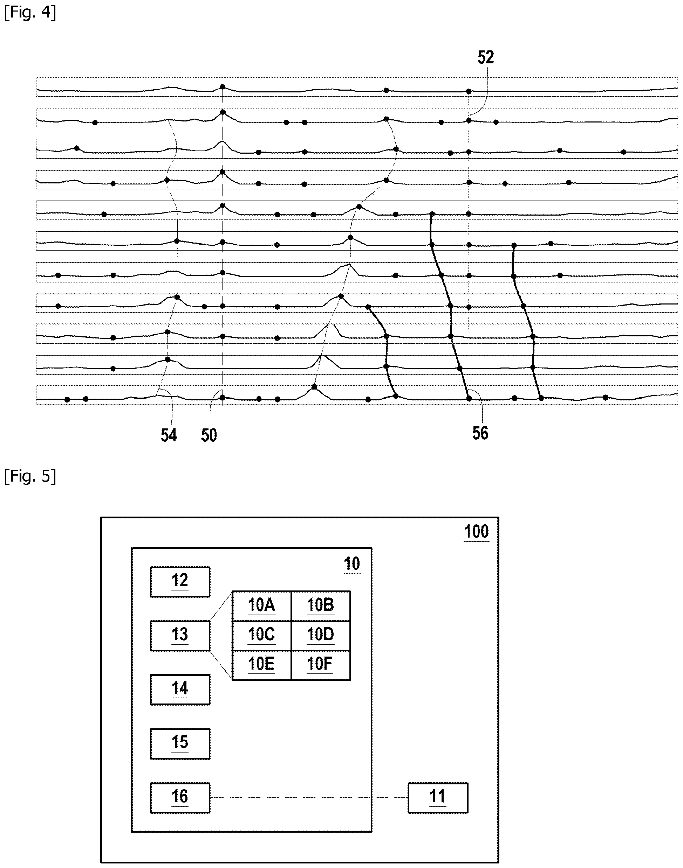

Le principe de l'étape suivante S24 est de retenir, parmi les pics détectés précédemment, ceux qui ont une régularité ou une redondance dans le temps. Pour ce faire, dans le présent mode de réalisation, on superpose les spectrogrammes correspondant à des instants successifs et transformés par rééchantillonnage synchrone comme exposé précédemment. Cette superposition est illustrée sur la figure 4, qui présente en l'occurrence onze spectrogrammes pris à onze instants successifs de haut en bas. Ces spectrogrammes sont disposés de sorte que leurs axes des abscisses, indiquant la fréquence, soit communs.

Les spectrogrammes en question peuvent être, par exemple, les transformées de Fourier calculées précédemment, ou encore des PSD intermédiaires, c'est-à-dire des PSD calculées à partir desdites transformées de Fourier sur une sous-période de la période de temps totale. Un tel regroupement permet de diminuer le nombre de spectrogrammes et donc d'alléger la charge de calcul.

Comme il ressort de la figure 4, certains pics sont présents à une même fréquence, avec une tolérance prédéterminée, sur plusieurs spectrogrammes successifs. Sur la figure 4, ces pics ont été identifiés grâce à des traits verticaux 50, 52, qui matérialisent le fait que la fréquence de ces pics, après rééchantillonnage synchrone, est sensiblement la même. Ainsi, on parle également d'alignement des pics. La tolérance prédéterminée mentionnée précédemment peut porter sur la position du pic mais également sur sa présence, des occurrences manquantes de pics pouvant être tolérées (voir par exemple le trait 50, deuxième spectrogramme en partant du bas). Les critères de tolérance peuvent être ajustés par l'homme du métier selon la précision et le taux de compression recherchés pour le procédé.

Sur la figure 4, d'autres courbes 54, 56 illustrent la persistance d'autres pics dans le temps ; ces pics seraient présents à une même fréquence (« alignés ») si les spectrogrammes étaient rééchantillonnés de manière synchrone avec un autre régime de rotation. Le repérage de ces pics peut être fait de manière explicite en superposant les spectrogrammes rééchantillonnés de manière synchrone avec un autre régime, comme détaillé précédemment au sujet d'un exemple de régime de rotation, mais peut aussi être fait sans effectuer explicitement cette détection d'alignement et les rééchantillonnages *ad hoc,* par exemple au moyen d'algorithmes de traitement d'images.

Ainsi, que les rééchantillonnages synchrones soient faits explicitement ou non, on retient ceux des pics détectés qui, dans des spectrogrammes correspondant à des instants successifs et transformés par rééchantillonnage synchrone avec une vitesse de rotation du palier, seraient présents à une même fréquence, avec une tolérance prédéterminée.

On identifie ensuite, à l'étape S26, pour chaque série de pics retenus, la raie spectrale correspondant à ces pics. La raie spectrale peut être la raie de la PSD qui a la même fréquence que les pics retenus. Cette raie se caractérise par sa fréquence, son amplitude, mais aussi l'accéléromètre dont elle est issue et le régime de rotation pour lequel les pics sont alignés.

Optionnellement, à l'étape S28, on détermine l'évolution de l'amplitude de la raie spectrale en fonction du temps, donc de la vitesse de rotation du palier qui, dans ce mode de réalisation, varie dans la période de temps considérée. En effet, les raies spectrales sont présentes dans certaines plages de régime. Par suite, en fonction de l'évolution de la vitesse de rotation du palier, l'amplitude de certaines raies augmente (par exemple les raies correspondant à la courbe 54 sur la figure 4) tandis que l'amplitude d'autres diminue (par exemple les raies correspondant aux courbes 50, 52 sur la figure 4). Généralement, les raies qui évoluent différemment ne sont pas liées au même phénomène. Ainsi, le fait que l'information représentative des raies (voir ci-après) comprenne l'évolution de l'amplitude de la raie en fonction de la vitesse de rotation du palier est intéressant pour diagnostiquer l'endommagement du palier. On note que cette évolution peut être stockée de manière plus ou moins précise et détaillée, allant par exemple du simple sens de variation à une information quantifiée. Selon un exemple, l'évolution peut être obtenue par régression à partie des spectrogrammes.

A l'étape S30, on conserve les données acquises jusqu'ici, à savoir les spectrogrammes, les raies, les régimes correspondants, les amplitudes, les évolutions, etc. pour leur traitement ultérieur. La détection d'autres pics et donc potentiellement d'autres raies peut être effectuée en répétant les étapes S24 et S26, éventuellement assorties de l'étape S28, comme le schématise la boucle de la figure 1.

Au cours de cette boucle, afin de faciliter la détection d'autres pics, les raies spectrales identifiées à ce stade peuvent, optionnellement, être soustraites des spectrogrammes (étape S32). Par exemple, si l'on souhaite soustraire une raie correspondant à un sommet (pic haut), il est possible de remplacer le sommet par une interpolation entre les vallées (pics bas) encadrant directement ce sommet. Selon un autre exemple, on remplace chaque amplitude entre les deux vallées encadrant le sommet d'un spectrogramme par l'interpolation avec les fréquences correspondantes du spectrogramme correspondant à l'instant précédent et du spectrogramme correspondant à l'instant suivant.

Après ces étapes, l'information non extraite des spectrogrammes est soit du bruit, soit de l'information qui n'a pas été détectée en raison de sa structure complexe. De manière optionnelle, afin de limiter le risque de perte d'information utile, à l'étape S34, les pics restants dont l'amplitude est supérieure à un seuil prédéterminé sont retenus, et les raies spectrales correspondantes sont identifiées. Ce seuil peut être soit figé, par exemple déterminé en fonction du taux de compression souhaité, soit dynamique, par exemple déterminé en fonction de la quantité de données déjà identifiées comme pertinentes (les raies spectrales retenues) et de la taille maximale souhaitée pour le rapport final.

Il est considéré, à ce stade, que l'information pertinente a été extraite du signal vibratoire. Afin de diminuer la taille de l'information à stocker dans le rapport, un ou plusieurs traitements, optionnels et indépendants les uns des autres, peuvent être effectués.

Selon un premier traitement, les raies spectrales identifiées peuvent être regroupées (étape S36). Notamment, chaque groupe de raies peut comprendre une première information correspondant à une raie spectrale de référence et une ou plusieurs deuxièmes informations correspondant chacune à une raie spectrale secondaire par rapport à la raie spectrale de référence. Les deuxièmes informations sont moins volumineuses que la première information mais sont suffisantes pour identifier complètement chaque raie spectrale secondaire à partir de la raie spectrale de référence. Par exemple, on part d'une raie identifiée de plus haute fréquence, et on divise sa fréquence par des nombres entiers. Si les fréquences obtenues correspondent à une ou plusieurs autres raies retenues, éventuellement avec une certaine tolérance, alors toutes ces raies peuvent être regroupées : on reconstruit ainsi des « peignes » comportant une raie fondamentale, ou plus généralement raie de référence, et une ou plusieurs harmoniques, ou plus généralement raies secondaires. Les groupes ou peignes peuvent être ordonnés selon leur taille ou selon les diviseurs employés, afin d'éviter de coder, pour chaque peigne, le type de peigne.

Selon un deuxième traitement, à l'étape S38, pour diminuer encore la taille des données à stocker dans le rapport, en l'occurrence pour éviter de stocker à chaque fois la position (c'est-à-dire la fréquence) de chaque raie spectrale, il est possible de comparer les raies identifiées avec les données spectrales d'un fonctionnement précédent prises dans les mêmes conditions de régimes. Ainsi, l'information représentative comprend, pour chaque raie spectrale déjà connue lors d'un fonctionnement précédent du palier, uniquement un indicateur d'amplitude, par exemple l'amplitude ou l'écart d'amplitude par rapport au fonctionnement précédent. Pour chaque raie spectrale non connue lors d'un fonctionnement précédent du palier, l'information représentative peut comprendre au moins la fréquence de ladite raie spectrale, et de préférence également son amplitude.

Il est possible de combiner les différentes approches proposées ici et, par exemple, d'envoyer la fréquence et la position de toutes les raies (c'est-à-dire sans l'étape S38) pour un certain régime et d'envoyer uniquement un indicateur d'amplitude (c'est-à-dire avec l'étape S38) pour les autres régimes. D'un fonctionnement à l'autre, on alterne de sorte qu'un spectre de référence (sans l'étape S38) est régulièrement envoyé pour chaque régime, tout en conservant une taille acceptable sur l'ensemble des données.

Selon un troisième traitement, à l'étape S40, une caractéristique des raies spectrales est codée avec une précision différente selon que la valeur de cette caractéristique est faible ou élevée. En l'occurrence, cette étape est réalisée en appliquant un logarithme, par exemple en logarithme en base 10. Tout autre logarithme conviendrait. L'homme du métier peut également choisir une autre fonction non linéaire qui écrase les plages nécessitant peu de précision et dilate les plages nécessitant une meilleure précision. Ainsi, la caractéristique, par exemple ici l'amplitude ou plus généralement l'indicateur d'amplitude, prend moins de place de stockage. En outre, la baisse de résolution dans certaines plages favorise une plus grande répétition de valeurs, donc augmente l'efficacité de la compression qui sera décrite ci-après.

Selon un quatrième traitement, à l'étape S42, les données peuvent être compressées à l'aide d'algorithmes de compression connus en eux-mêmes, par exemple un algorithme de compression sans perte de type LZW. Le dictionnaire de codage utilisé dans de tels algorithmes peut être préétabli, de sorte qu'il n'est pas utile de le transmettre. En outre, ce dictionnaire peut être spécifique aux raies et différent du dictionnaire utilisé pour compresser l'information relative au fond de spectre.

Ces traitements, qu'ils soient appliqués ou non, résultent en une information qui est représentative des raies spectrales identifiées à l'étape S26, voire à l'étape S34, au sens où il est possible de reconstruire lesdites raies, au moins avec une certaine tolérance, sur la base de l'information représentative.

Cette information représentative est stockée, à l'étape S44, dans un rapport utilisable par une unité de détection d'un endommagement du palier.

Optionnellement, ce rapport peut être transmis, à l'étape S46, à une unité de détection, typiquement une unité au sol qui effectuera le diagnostic d'endommagement sur la base du rapport, alors que l'ensemble du traitement décrit jusqu'ici avait été réalisé par un dispositif embarqué. Alternativement, ce rapport pourrait être stocké en attente d'un retour de l'aéronef au sol, et le ou les rapports stockés seraient déchargés une fois l'aéronef au sol.

La figure 5 montre schématiquement une turbomachine 100 comprenant une unité d'acquisition de données 10 pour la détection d'un endommagement d'un palier. L'unité d'acquisition de données 10 dispose ici de l'architecture matérielle d'un ordinateur. Elle comporte notamment un processeur 12, une mémoire morte 13, une mémoire vive 14, une mémoire non volatile 15 et des moyens de communication 16 avec l'accéléromètre 11 permettant à l'unité d'acquisition de données 10 d'obtenir les mesures réalisées par l'accéléromètre 11. Le dispositif d'estimation 10 et l'accéléromètre 11 sont par exemple reliés par un bus de données numériques ou une interface série (ex. interface USB (Universal Serial Bus)) ou sans fil connu(e) en soi.

La mémoire morte 13 du dispositif d'estimation 10 constitue un support d'enregistrement conforme au présent exposé, lisible par le processeur 12 et sur lequel est enregistré un programme d'ordinateur conforme au présent exposé, comportant des instructions pour l'exécution des étapes d'un procédé d'acquisition de données décrites précédemment en référence aux figures 1 à 4.

Ce programme d'ordinateur définit, de façon équivalente, des modules fonctionnels de l'unité d'acquisition de données 10 aptes à mettre en oeuvre les étapes du procédé d'acquisition de données. Ainsi, notamment, ce programme d'ordinateur définit un module 10A d'obtention d'un signal vibratoire du palier sur une période de temps ; un module 10B de détermination des spectrogrammes dudit signal vibratoire à différents instants de la période de temps ; un module 10C de détection des pics sur chaque spectrogramme ; un module de sélection 10D configuré pour, parmi les pics détectés par le module de détection, retenir les pics qui, dans des spectrogrammes correspondant à des instants successifs et transformés par rééchantillonnage synchrone avec une vitesse de rotation du palier, seraient présents à une même fréquence, avec une tolérance prédéterminée ; un module 10E d'identification de raies spectrales correspondant aux pics retenus ; un module de stockage 10F, configuré pour stocker une information représentative desdites raies spectrales dans un rapport utilisable par une unité de détection d'un endommagement du palier. Les fonctions de ces modules ont été décrites plus en détail en référence aux étapes du procédé d'acquisition de données.

Bien que la présente description se réfère à des exemples de réalisation spécifiques, des modifications peuvent être apportées à ces exemples sans sortir de la portée générale de l'invention telle que définie par les revendications. En particulier, des caractéristiques individuelles des différents modes de réalisation illustrés/mentionnés peuvent être combinées dans des modes de réalisation additionnels. Par conséquent, la description et les dessins doivent être considérés dans un sens illustratif plutôt que restrictif.

## Revendications

1. Procédé d'acquisition de données pour la détection d'un endommagement d'un palier, comprenant les étapes suivantes :
(a) Obtenir (S10) un signal vibratoire du palier sur une période de temps ;
(b) déterminer (S14) des spectrogrammes dudit signal vibratoire à différents instants de la période de temps ;
(c) détecter (S22) les pics sur chaque spectrogramme ;
(d) parmi les pics détectés, retenir (S24) les pics qui, dans des spectrogrammes correspondant à des instants successifs et transformés par rééchantillonnage synchrone avec une vitesse de rotation du palier, seraient présents à une même fréquence, avec une tolérance prédéterminée ;
(e) identifier (S26) des raies spectrales correspondant aux pics retenus ;
(f) stocker (S44) une information représentative desdites raies spectrales dans un rapport utilisable par une unité de détection d'un endommagement du palier.

2. Procédé d'acquisition selon la revendication 1, comprenant, avant de stocker l'information représentative des raies spectrales à l'étape (f), le fait de coder (S40) une caractéristique des raies spectrales avec une précision différente selon que la valeur de cette caractéristique est faible ou élevée, et inclure cette caractéristique codée dans ladite information représentative.

3. Procédé d'acquisition selon la revendication 1 ou 2, dans lequel les raies spectrales correspondant à un fonctionnement nominal du palier sont ignorées (S16).

4. Procédé d'acquisition selon l'une quelconque des revendications 1 à 3, dans lequel les raies spectrales identifiées à l'étape (e) sont soustraites des spectrogrammes (S32), et les étapes (d) et (e) sont répétées.

5. Procédé d'acquisition selon la revendication 4, dans lequel, après la répétition des étapes (d) et (e), les pics restants dont l'amplitude est supérieure à un seuil prédéterminé sont retenus, et les raies spectrales correspondantes sont identifiées (S34).

6. Procédé d'acquisition selon l'une quelconque des revendications 1 à 5, dans lequel l'information représentative comprend l'évolution de l'amplitude de la raie spectrale en fonction de la vitesse de rotation du palier (S28).

7. Procédé d'acquisition selon l'une quelconque des revendications 1 à 6, dans lequel l'information représentative comprend des groupes (S36) comportant une première information correspondant à une raie spectrale de référence et une ou plusieurs deuxièmes informations correspondant chacune à une raie spectrale secondaire par rapport à la raie spectrale de référence.

8. Procédé d'acquisition selon l'une quelconque des revendications 1 à 7, dans lequel l'information représentative comprend, pour chaque raie spectrale déjà connue lors d'un fonctionnement précédent du palier, uniquement un indicateur d'amplitude (S38), et pour chaque raie spectrale non connue lors d'un fonctionnement précédent du palier, au moins la fréquence de ladite raie spectrale.

9. Procédé d'acquisition selon l'une quelconque des revendications 1 à 8, dans lequel, avant d'être stockée, l'information représentative est codée au moyen d'un dictionnaire préétabli avant la mise en oeuvre dudit procédé d'acquisition (S42).

10. Unité d'acquisition de données (10) pour la détection d'un endommagement d'un palier, notamment pour turbomachine, l'unité d'acquisition comprenant
(a) un module d'obtention (10A) d'un signal vibratoire du palier sur une période de temps ;
(b) un module de détermination (10B) des spectrogrammes dudit signal vibratoire à différents instants de la période de temps ;
(c) un module de détection (10C) des pics sur chaque spectrogramme ;
(d) un module de sélection (10D) configuré pour, parmi les pics détectés par le module de détection, retenir les pics qui, dans des spectrogrammes correspondant à des instants successifs et transformés par rééchantillonnage synchrone avec une vitesse de rotation du palier, seraient présents à une même fréquence, avec une tolérance prédéterminée ;
(e) un module d'identification (10E) de raies spectrales correspondant aux pics retenus ;
(f) un module de stockage (10F), configuré pour stocker une information représentative desdites raies spectrales dans un rapport utilisable par une unité de détection d'un endommagement du palier.

## Patentansprüche

1. Datenerfassungsverfahren zur Erkennung einer Beschädigung eines Lagers, umfassend die folgenden Schritte:
(a) Beziehen (S10) eines Schwingungssignals des Lagers innerhalb eines Zeitraums;
(b) Bestimmen (S14) von Spektrogrammen des Schwingungssignals zu unterschiedlichen Zeitpunkten des Zeitraums;
(c) Erkennen (S22) der Peaks in jedem Spektrogramm;
(d) aus den erkannten Peaks Behalten (S24) der Peaks, die in Spektrogrammen, die aufeinanderfolgenden Zeitpunkten entsprechen und durch mit einer Drehzahl des Lagers synchrones Resampling umgewandelt wurden, bei derselben Frequenz vorliegen würden, mit einer vorher bestimmten Toleranz;
(e) Identifizieren (S26) von Spektrallinien, die den behaltenen Peaks entsprechen;
(f) Speichern (S44) einer Information, die für die Spektrallinien repräsentativ ist, in einem Bericht, der von einer Einheit zur Erkennung einer Beschädigung des Lagers verwendbar ist.

2. Erfassungsverfahren nach Anspruch 1, umfassend vor dem Speichern der Information, die für Spektrallinien repräsentativ ist, im Schritt (f) ein Codieren (S40) eines Charakteristikums von Spektrallinien mit einer unterschiedlichen Präzision in Abhängigkeit davon, ob der Wert dieses Charakteristikums klein oder hoch ist, und ein Einbeziehen dieses codierten Charakteristikums in der repräsentativen Information.

3. Erfassungsverfahren nach Anspruch 1 oder 2, wobei die Spektrallinien, die einem Nennbetrieb des Lagers entsprechen, ignoriert (S16) werden.

4. Erfassungsverfahren nach einem der Ansprüche 1 bis 3, wobei die im Schritt (e) identifizierten Spektrallinien von Spektrogrammen subtrahiert werden (S32) und die Schritte (d) und (e) wiederholt werden.

5. Erfassungsverfahren nach Anspruch 4, wobei nach der Wiederholung der Schritte (d) und (e) die verbleibenden Peaks, deren Amplitude höher als ein vorher bestimmter Schwellwert ist, behalten werden und die entsprechenden Spektrallinien identifiziert werden (S34).

6. Erfassungsverfahren nach einem der Ansprüche 1 bis 5, wobei die repräsentative Information die Entwicklung der Amplitude der Spektrallinie in Abhängigkeit von der Drehzahl des Lagers (S28) umfasst.

7. Erfassungsverfahren nach einem der Ansprüche 1 bis 6, wobei die repräsentative Information Gruppen (S36) umfasst, die eine erste Information, die einer Referenzspektrallinie entspricht, und eine oder mehrere zweite Informationen, die jeweils einer sekundären Spektrallinie in Bezug auf die Referenzspektrallinie entsprechen, umfassen.

8. Erfassungsverfahren nach einem der Ansprüche 1 bis 7, wobei die repräsentative Information für jede Spektrallinie, die während eines vorhergehenden Betriebs des Lagers bereits bekannt ist, nur einen Amplitudenindikator (S38) und für jede Spektrallinie, die während eines vorhergehenden Betriebs des Lagers nicht bekannt ist, mindestens die Frequenz der Spektrallinie umfasst.

9. Erfassungsverfahren nach einem der Ansprüche 1 bis 8, wobei die repräsentative Information, bevor sie gespeichert wird, vor der Durchführung des Erfassungsverfahrens mittels eines vorher erstellten Lexikons codiert wird (S42).

10. Datenerfassungseinheit (10) zur Erkennung einer Beschädigung eines Lagers, insbesondere für eine Turbomaschine, wobei die Erfassungseinheit umfasst:
(a) ein Modul (10A) zum Beziehen eines Schwingungssignals des Lagers innerhalb eines Zeitraums;
(b) ein Modul (10B) zum Bestimmen von Spektrogrammen des Schwingungssignals zu unterschiedlichen Zeitpunkten des Zeitraums;
(c) ein Modul (10C) zum Erkennen von Peaks in jedem Spektrogramm;
(d) ein Auswahlmodul (10D), das zum Behalten, aus den durch das Erfassungsmodul erkannten Peaks, der Peaks, die in Spektrogrammen, die aufeinanderfolgenden Zeitpunkten entsprechen und durch mit einer Drehzahl des Lagers synchrones Resampling umgewandelt wurden, bei derselben Frequenz vorliegen würden, mit einer vorher bestimmten Toleranz konfiguriert ist;
(e) ein Modul (10E) zum Identifizieren von Spektrallinien, die den behaltenen Peaks entsprechen;
(f) ein Speichermodul (10F), das zum Speichern einer Information, die für die Spektrallinien repräsentativ ist, in einem Bericht, der von einer Einheit zur Erkennung einer Beschädigung des Lagers verwendbar ist, konfiguriert ist.

## Claims

1. A method for acquiring data for detecting damage to a bearing, comprising the following steps:
(a) obtaining (S10) a vibration signal from the bearing over a period of time;
(b) determining (S14) spectrograms of said vibration signal at various instants of the period of time;
(c) detecting (S22) the peaks on each spectrogram;
(d) from among the detected peaks, retaining (S24) the peaks which, in spectrograms corresponding to successive instants and transformed through synchronous resampling at a rotational speed of the bearing, would be present at the same frequency, with a predetermined tolerance;
(e) identifying (S26) spectral lines corresponding to the retained peaks;
(f) storing (S44) an information item representative of said spectral lines in a record able to be used by a unit for detecting damage to the bearing.

2. The acquisition method according to claim 1, comprising, before storing the information item representative of the spectral lines in step (f), encoding (S40) a characteristic of the spectral lines with a different precision depending on whether the value of this characteristic is low or high, and including this encoded characteristic in said representative information item.

3. The acquisition method according to claim 1 or 2, wherein the spectral lines corresponding to a nominal operation of the bearing are ignored (S16).

4. The acquisition method according to any one of claims 1 to 3, wherein the spectral lines identified in step (e) are subtracted from the spectrograms (S32), and steps (d) and (e) are repeated.

5. The acquisition method according to claim 4, wherein, after repeating steps (d) and (e), the remaining peaks whose amplitude is greater than a predetermined threshold are retained, and the corresponding spectral lines are identified (S34).

6. The acquisition method according to any one of claims 1 to 5, wherein the representative information item comprises the evolution of the amplitude of the spectral line as a function of the rotational speed of the bearing (S28).

7. The acquisition method according to any one of claims 1 to 6, wherein the representative information item comprises groups (S36) including a first information item corresponding to a reference spectral line and one or more second information items each corresponding to a secondary spectral line relative to the reference spectral line.

8. The acquisition method according to any one of claims 1 to 7, wherein the representative information item comprises, for each spectral line already known during a previous operation of the bearing, only an amplitude indicator (S38), and for each spectral line not known during a previous operation of the bearing, at least the frequency of said spectral line.

9. The acquisition method according to any one of claims 1 to 8, wherein, before being stored, the representative information item is encoded by means of a codebook pre-established before the implementation of said acquisition method (S42).

10. A data acquisition unit (10) for detecting damage to a bearing, in particular for a turbomachine, the acquisition unit comprising
(a) a module for obtaining (10A) a vibration signal from the bearing over a period of time;
(b) a module (10B) for determining spectrograms of said vibration signal at various instants of the period of time;
(c) a module (10C) for detecting the peaks on each spectrogram;
(d) a selection module (10D) configured, from among the peaks detected by the detection module, to retain the peaks which, in spectrograms corresponding to successive instants and transformed through synchronous resampling at a rotational speed of the bearing, would be present at the same frequency, with a predetermined tolerance;
(e) a module (10E) for identifying spectral lines corresponding to the retained peaks;
(f) a storage module (10F), configured to store an information item representative of said spectral lines in a record able to be used by a unit for detecting damage to the bearing.
